# EUROPEAN PATENT SPECIFICATION

(11) **EP 2 034 592 B1**
(45) Date of publication and mention of the grant of the patent: **14.06.2017**
(21) Application number: 08014227.6
(22) Date of filing: 08.08.2008
(51) Int. Cl.: H02K 15/09, H02K 15/095

(54) **Winding device**
Wicklungsvorrichtung
Dispositif d'enroulement

(30) Priority: 27.08.2007 JP 2007219902
(43) Date of publication of application: 11.03.2009
(73) Proprietor: Nittoku Engineering Co., Ltd., Saitama-shi Saitama 336-8561 (JP)
(72) Inventor: Ujiie, Yoshihiro, Date-gun Fukushima 960-1393 (JP)
(74) Representative: Grünecker Patent- und Rechtsanwälte PartG mbB

(56) References cited:
- EP-A2- 1 251 628
- JP-A- H0 515 119
- JP-A- S6 110 948
- JP-A- H04 317 544
- JP-A- H10 257 724
- JP-A- H11 178 291
- JP-A- 2000 316 260
- JP-A- 2001 028 869
- JP-A- 2004 274 850
- US-A1- 2005 206 264

## Description

This invention relates to a winding device that winds a wire regularly around a rotating work piece in multiple layers.

### DESCRIPTION OF RELATED ART

JPH1025724A discloses a devices which winds a wire (2) around a rotating work piece (4), a spindle shaft (15) that supports the work piece (4) and rotates around an axial center (XX'), a wire supply mechanism (9) that supplies the wire (2), the work piece (4), a guide (13) that rotates together with the spindle shaft (15) and guides the wire (2) supplied by the wire supply mechanism (9) to a winding position of the work piece (4) and a guide moving mechanism (18) that adjusts the winding position of the work piece (4) by adjusting the position of the guide (13) relative to the work piece (4).

JP 2001 028869 discloses a winding machine with four guide pawls.

JP3266538B2 and JP3679337B2 disclose flyer winding devices that wind a wire regularly around a work piece such as an armature core of a dynamo-electric machine or the like by guiding the wire, which is fed from a flyer (wire supply mechanism), to a slot between teeth of the work piece using a wire guide (former).

In the winding device disclosed in JP3266538B2, each time winding is performed onto a magnetic iron core (a tooth), a work piece is held by a dividing attachment, and a wire fed from a flyer that rotates around the work piece is guided to and wound onto a winding position by a center former and an opposing former. By moving the center former and opposing former synchronously in a rotary axis direction of the flyer, the wire is wound regularly onto the iron core. Winding of a second layer onward is performed by moving the center former and opposing former in a direction heading away from the work piece by an amount corresponding to the wire diameter.

Similarly, in the winding device disclosed in JP3679337B2, a wire fed from a flyer is guided to and wound around a magnetic iron core by a former guide, and the former guide is constituted to be movable.

### SUMMARY OF THE INVENTION

In a flyer winding device, when an outer diameter of the flyer that rotates around the work piece increases, the inertial force and weight thereof also increase. Accordingly, when the flyer is rotated at high speed, vibration may occur in the winding device such that regular winding cannot be achieved.

Further, the wire is twisted once every time the flyer performs a single revolution, and therefore, when thick, highly rigid wire is wound, a force for returning the wire to its original state acts on the wire and a large reactive force acts on the flyer itself from the wire. Hence, the tension of the wire varies easily as it slides over the former and is wound onto the work piece, and as a result, regular winding may be impossible. The tension of the wire is also likely to vary when a distance from a tip end of the flyer to the work piece is great.

Further, to achieve an improvement in the performance of a motor coil or various other types of coil, the space factor of the wire is often increased by employing flat wire having a square cross-section as the wire to be wound. With a flyer winding device, however, the wire is twisted and in certain cases is wound upside down, and therefore it is not always possible to achieve regular winding.

This invention has been designed in consideration of the problems described above, and it is an object thereof to provide a winding device which can achieve stable regular winding without the occurrence of a twist in the wire.

The above mentioned object is solved according to the invention by a winding device comprising the features of claim 1.
Advantageous embodiments can be derived from the subclaims. In order to solve above object, this invention provides a winding device that winds a wire around a rotating work piece. The winding device comprises a spindle shaft that supports the work piece and rotates about an axial center, a wire supply mechanism that supplies the wire to the work piece, a guide that rotates together with the spindle shaft and guides the wire supplied by the wire supply mechanism to a winding position of the work piece, and a guide moving mechanism that adjusts the winding position of the work piece by adjusting a position of the guide relative to the work piece, wherein the guide is capable of being moved in an axial direction and a radial direction of the spindle shaft by the guide moving mechanism.

### BRIEF DESCRIPTION OF THE DRAWINGS

FIG. 1 is a perspective view showing a winding device according to an embodiment of this invention.
FIG. 2 is an enlarged perspective view showing the main parts of the winding device according to an embodiment of this invention.
FIG. 3 is an illustrative view illustrating the main parts of main and secondary spindle mechanisms, a guide, and a guide moving mechanism.
FIGs. 4A to 4F are views showing a winding operation in chronological order.
FIG. 5 is a perspective view showing an example of a work piece.
FIG. 6 is a perspective view showing an example of the guide moving mechanism.

### PREFERRED EMBODIMENTS OF THE INVENTION

An embodiment of this invention will be described below with reference to the figures.

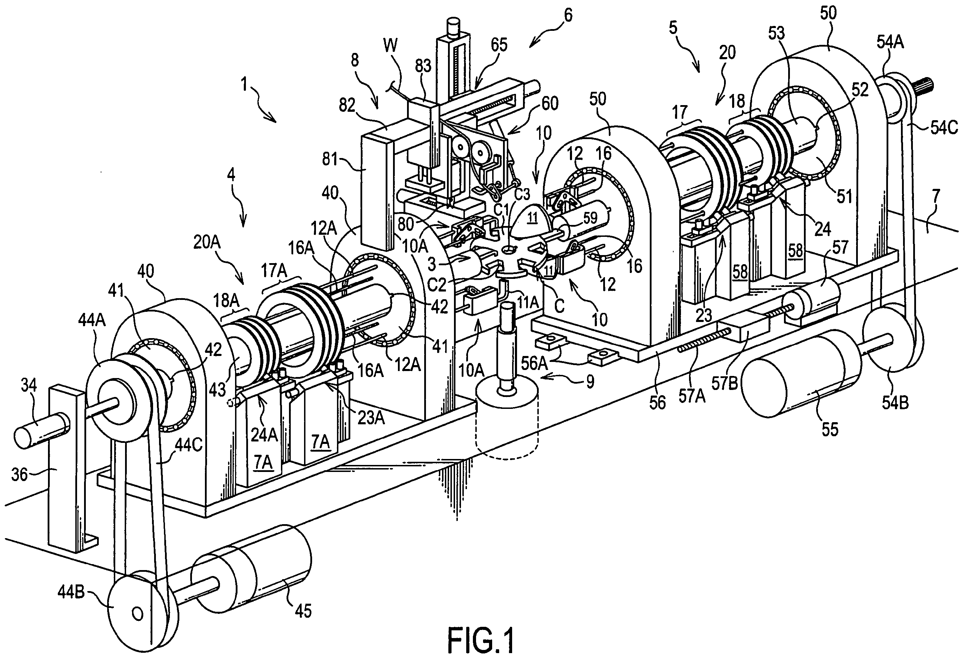

Referring to FIGs. 1 to 3, the constitution of a winding device 1 according to an embodiment of this invention will be described.

First, an armature core C serving as a winding subject will be described. The armature core C is fixed to a rotary shaft with an armature coil wound around each tooth C1 (magnetic pole) to form an armature of a dynamo-electric machine. The armature core C is covered by an insulating body or the like to insulate it from a wire W wound around it.

The armature core C is formed with a circular outer peripheral shape, and comprises a plurality of teeth C1 projecting radially from a root portion at equal circumferential direction intervals. A slot C2 that accommodates a winding is formed between the teeth C 1.

A tip end surface of each tooth C1 is formed in an arc shape, and when the dynamo-electric machine is assembled, the tip end surface faces a stator core inner surface with a gap therebetween. The tip end surface of each tooth C1 is formed to project toward both sides in the circumferential direction, thereby narrowing an opening portion of the slot C2, and the winding that is wound around the tooth C1 is accommodated in the slot C2.

For example, a first layer of the wire W is wound regularly around each tooth C1 from a tip end side toward a root side of the tooth C 1, whereupon a second layer is wound regularly from the root side toward the tip end side. Then, in a similar fashion, a plurality of layers are wound regularly in succession to form an armature coil. The winding layers may be formed such that the first layer is wound regularly from the root side to the tip end side of the tooth C1 and the second layer is wound regularly from the tip end side to the root side of the tooth C1.

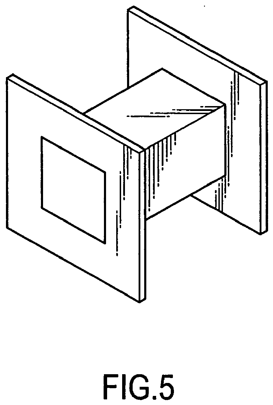

It should be noted that the work piece of the winding device 1 according to this embodiment is not limited to the armature core C having the plurality of teeth C1 (winding shafts) described above, and instead, a resin or ceramic coil bobbin having a single winding shaft, such as that shown in FIG. 5, or a split core of a stator may be used. In other words, the winding device according to this embodiment may be applied to any work piece capable of rotating about a winding shaft. A case in which the armature core C having the plurality of winding shafts (teeth C1) is used as a work piece will be described below.

The winding device 1 comprises a main spindle mechanism 4 having a main spindle shaft 43 that drives the armature core C to rotate using the tooth C1 to be subjected to winding (to be referred to hereafter as the "winding subject tooth C1") as a rotary central axis, a secondary spindle mechanism 5 having a secondary spindle shaft 53 that is disposed opposite to, and coaxially with, the main spindle shaft 43 on the other side of the armature core C and rotates in synchronization with the main spindle shaft 43, and a wire supply mechanism 6 that supplies the wire W to the winding subject tooth C1. The main spindle mechanism 4, secondary spindle mechanism 5, and wire supply mechanism 6 are supported on a support base 7.

The secondary spindle mechanism 5 comprises a guide 10 serving as a first guide that rotates together with the secondary spindle shaft 53 to guide the wire W fed from the wire supply mechanism 6 to a winding position on the winding subject tooth C1, and a guide moving mechanism 20 that adjusts the winding position on the winding subject tooth C1 by adjusting the position of the guide 10 relative to the winding subject tooth C1. The winding position is a position of the winding subject tooth C1 in which the wire W is to be wound when the wire W is wound regularly.

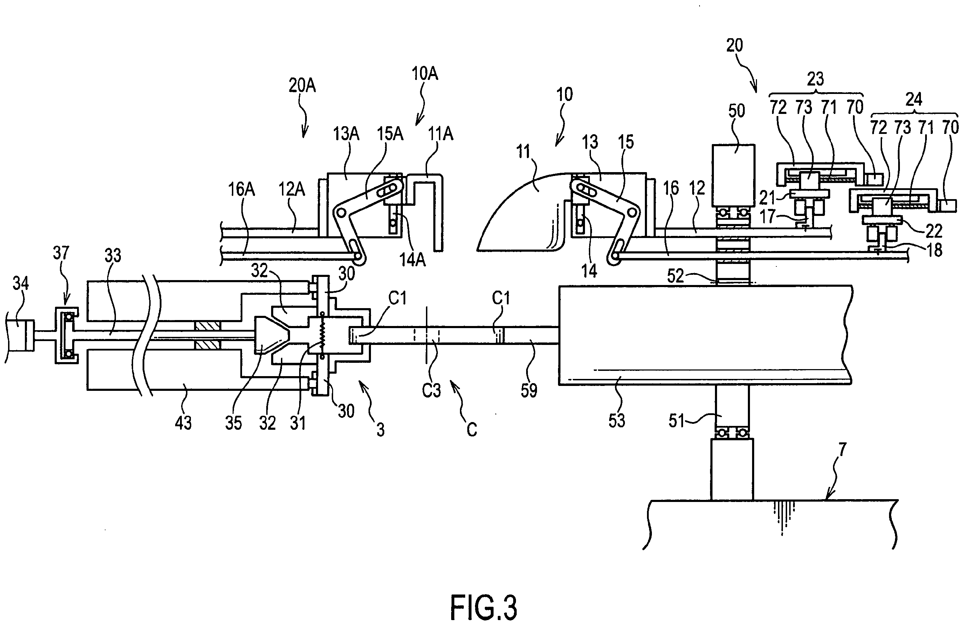

The guide 10 is constituted by a pair of formers 11 disposed so as to sandwich the winding subject tooth C1. An outer peripheral surface of the former 11 is formed as a curved surface. The wire W fed from the wire supply mechanism 6 is guided so as to slide down the outer peripheral curved surface of the former 11, and thereby led to a front surface of the winding subject tooth C 1. As long as the former 11 is provided opposite at least one surface of the plurality of outer peripheral surfaces of the winding subject tooth C1, the function thereof is exhibited. FIG. 3 only shows one former 11 of the pair of formers 11 and the guide moving mechanism 20 belonging thereto, while the other former 11 disposed on a lower side of the figure and the guide moving mechanism 20 belonging thereto are not shown.

The guide moving mechanism 20 moves the former 11 in an axial direction and a radial direction of the main and secondary spindle shafts 43, 53. Here, the axial direction of the main and secondary spindle shafts 43, 53 corresponds to the axial direction of the winding subject tooth C1, and hereafter will be referred to simply as the "axial direction". Further, the radial direction of the main and secondary spindle shafts 43, 53 is a direction approaching and heading away from the winding subject tooth C1, and hereafter will be referred to simply as the "radial direction".

If required, the main spindle mechanism 4 may be provided with a guide 10A serving as a second guide that guides the wire W to the winding position on the winding subject tooth C1 on the other side of the guide 10, as described in JP3266538B2, for example. In this embodiment, a case in which the main spindle mechanism 4 is provided with the guide 10A will be described.

The guide 10A is constituted by a pair of opposing formers 11A disposed opposite the pair of formers 11. The opposing former 11A includes an arm portion that is orthogonal to the tooth C1 and opposite to the former 11. The wire W is guided to the winding subject tooth C 1 between the outer peripheral surface of the former 11 and the arm portion of the opposing former 11A.

Similarly to the secondary spindle mechanism 5, the main spindle mechanism 4 comprises a guide moving mechanism 20A that moves the opposing former 11A in the axial direction and the radial direction. It should be noted that FIG. 3 only shows one opposing former 11A of the pair of opposing formers 11A and the guide moving mechanism 20A belonging thereto, while the other opposing former 11A disposed on a lower side of the figure and the guide moving mechanism 20A belonging thereto are not shown.

As regards the main and secondary spindle mechanisms 4, 5, when the armature core C having a plurality of winding shafts is used as a work piece, as in this embodiment, both the main spindle mechanism 4 and the secondary spindle mechanism 5 are preferably used. However, when the work piece is a coil bobbin having a single winding shaft or a split core of a stator, as shown in FIG. 5, the secondary spindle mechanism 5 may be omitted, and the winding device 1 may be constituted by the main spindle mechanism 4 alone.

Further, when the work piece is a coil bobbin having a single winding shaft or a split core of a stator, as shown in FIG. 5, and both the main and secondary spindle mechanisms 4, 5 are used, the guide 10 (10A) need only be disposed on at least one of the main spindle mechanism 4 and the secondary spindle mechanism 5.

The winding device 1 further comprises a cutting mechanism 8 that cuts the wire W extending from the wire supply mechanism 6 to a winding completion end of the tooth C1 at the end of winding, and an index mechanism 9 that rotates the armature core C about its axial center every time winding of the wire W around a single tooth C1 is completed to change the winding subject tooth C1.

When the work piece is a coil bobbin having a single winding shaft or a split core of a stator, a work piece conveyance mechanism that supplies and takes out the work piece to the winding device 1 at the start and end of winding may be provided in place of the index mechanism 9.

The main spindle mechanism 4 comprises rotary bodies 41 supported by two heads 40, which are disposed on the support base 7 at a distance from each other in the axial direction, so as to be free to rotate via a bearing. The cylindrical main spindle shaft 43 penetrates the two rotary bodies 41 and rotates integrally therewith via keys 42.

A pulley 44A is fixed to a base end side of the main spindle shaft 43, and a pulley 44B is fixed to an output shaft of a spindle motor 45 disposed below the support base 7. A belt 44C is wrapped around the pulley 44A and the pulley 44B. The main spindle shaft 43 is driven to rotate by the spindle motor 45. It should be noted that in the main spindle mechanism 4, a direction approaching the secondary spindle mechanism 5 defines as forward movement.

As shown in FIG. 3, a chuck mechanism 3 serving as a core support jig that supports the armature core C is provided on the tip end of the main spindle shaft 43. The chuck mechanism 3 comprises a pair of chucks 30 disposed on the tip end of the main spindle shaft 43 to be capable of sliding in the radial direction, and a spring 31 serving as biasing means for biasing the pair of chucks 30 in a direction approaching each other. The pair of chucks 30 support the armature core C using the biasing force of the spring 31.

The pair of chucks 30 are respectively provided with inclined cams 32 disposed opposite each other and formed such that opposing surfaces thereof are inclined. A chuck opening/ closing rod 33 capable of moving in the axial direction is disposed in a hollow portion of the main spindle shaft 43. A cam 35 having a cam surface that corresponds to the inclined surfaces of the inclined cams 32 is coupled to a tip end of the chuck opening/closing rod 33. The chuck opening/closing rod 33 is moved in the axial direction by a cylinder 34 disposed on a base end side thereof.

The cylinder 34 is supported by a strut 36 disposed on the base end side of the main spindle shaft 43. A tip end of a piston rod projecting from the cylinder 34 is connected to the base end of the chuck opening/closing rod 33 projecting from a base end opening portion of the main spindle shaft 43 via thrust bearing 37.

When the cylinder 34 is driven such that chuck opening/closing rod 33 moves forward from a standby position, the cam 35 on the tip end of the chuck opening/closing rod 33 is inserted between the inclined cams 32, and as a result, the pair of chucks 30 are pushed so as to flare outward in the radial direction via the inclined cams 32. Thus, the chucks 30 are opened.

As shown in FIG. 1, a moving plate 56 capable of moving in the axial direction is disposed on the support base 7, and the secondary spindle mechanism 5 is placed on the moving plate 56. The secondary spindle mechanism 5 comprises rotary bodies 51 supported by two heads 50, which are disposed on the moving plate 56 at a distance from each other in the axial direction, so as to be free to rotate via a bearing. The cylindrical secondary spindle shaft 53 penetrates the two rotary bodies 51 and rotates integrally therewith via keys 52. It should be noted that in the secondary spindle mechanism 5, a direction approaching the main spindle mechanism 4 defines as forward movement.

A projection 59 that contacts the tip end surface of the winding subject tooth C1 is provided on a tip end of the secondary spindle shaft 53. Thus, the two ends of the armature core C are supported by the main spindle shaft 43 and secondary spindle shaft 53, and hence the armature core C can be held with stability.

The moving plate 56 is supported by a linear guide 56A disposed on the support base 7 and extending in the axial direction. A follower 57B that is screwed to a ball screw 57A extending parallel to the linear guide 56A is coupled to the moving plate 56. The ball screw 57A is coupled to an output shaft of a spindle moving motor 57 disposed on the support base 7. When the spindle moving motor 57 is driven, the follower 57B moves along the ball screw 57A such that the moving plate 56 moves in the axial direction along the linear guide 56A. Hence, by driving the spindle moving motor 57, the secondary spindle shaft 53 can be moved in the axial direction.

A pulley 54A is spline-coupled to a base end side of the secondary spindle shaft 53, and a pulley 54B is fixed to an output shaft of a spindle motor 55 disposed below the support base 7. A belt 54C is wrapped around the pulley 54A and the pulley 54B. The secondary spindle shaft 53 is driven to rotate by the spindle motor 55.

The secondary spindle shaft 53 and the pulley 54A are spline-coupled, and therefore, when the moving plate 56 moves in the axial direction, the secondary spindle shaft 53 moves relative to the pulley 54A in the axial direction by varying the position in which it is coupled to the pulley 54A.

Next, referring to FIG. 3, the guide moving mechanisms 20, 20A will be described.

As shown in FIG. 3, the former 11 is supported by a rotating moving plate 13 that rotates together with the secondary spindle shaft 53 and is capable of moving relative to the secondary spindle shaft 53 in the axial direction.

The rotating moving plate 13 is coupled to a tip end of an axial direction moving shaft 12 serving as a first guide shaft that penetrates the rotary body 51 in the axial direction. The axial direction moving shaft 12 penetrates the moving body 51 in the axial direction, and therefore rotates together with the secondary spindle shaft 53 and is capable of moving relative to the secondary spindle shaft 53 in the axial direction. The axial direction moving shaft 12 is connected to the former 11 via the rotating moving plate 13, and therefore, by moving the axial direction moving shaft 12 in the axial direction, the former 11 moves in the axial direction.

A linear guide 14 extending in the radial direction is disposed on the rotating moving plate 13, and the former 11 is supported to be capable of moving along the linear guide 14. Further, an L-shaped bell crank 15 constituted by two arms is supported on the rotating moving plate 13 to be capable of rotating using a connection portion between the two arms as a fulcrum.

An elongated hole is formed in a free end of one of the arms of the bell crank 15, and an idler pin provided on the base end portion of the former 11 is engaged with the elongated hole. Further, an elongated hole is formed in the free end of the other arm of the bell crank 15, and a tip end of a radial direction moving shaft 16 serving as a second guide shaft that penetrates the rotary body 51 in the axial direction is engaged with this elongated hole.

Similarly to the axial direction moving shaft 12, the radial direction moving shaft 16 penetrates the rotary body 51 in the axial direction, and therefore rotates together with the secondary spindle shaft 53 and is capable of moving relative to the secondary spindle shaft 53 in the axial direction. The radial direction moving shaft 16 is connected to the former 11 via the bell crank 15, and therefore, by moving the radial direction moving shaft 16 in the axial direction relative to the axial direction moving shaft 12, the former 11 moves in the radial direction along the linear guide 14. Thus, the bell crank 15 serves as a conversion mechanism that converts axial direction movement into radial direction movement.

Hence, by moving the axial direction moving shaft 12 and the radial direction moving shaft 16 synchronously, the axial direction position of the former 11 can be adjusted, and by moving the radial direction moving shaft 16 relative to the axial direction moving shaft 12, the radial direction position of the former 11 can be adjusted.

The axial direction moving shaft 12 and radial direction moving shaft 16 are provided individually on each of the pair of formers 11, and therefore the formers 11 can move individually in the axial direction and radial direction.

In this embodiment, the position in which the radial direction moving shaft 16 penetrates the rotary body 51 is further toward the inner peripheral side than the axial direction moving shaft 12, but by modifying the shape of the bell crank 15 or the like, the radial direction moving shaft 16 may be set on an identical circumference to the axial direction moving shaft 12.

As shown in FIGs. 1 and 3, ring-shaped annular cams 17, 18 disposed on the outer periphery of the secondary spindle shaft 53 are connected to the axial direction moving shaft 12 and the radial direction moving shaft 16, respectively. Thus, the annular cams 17, 18 rotate together with the secondary spindle shaft 53 and move together with the moving shafts 12, 16 connected thereto in the axial direction. In this embodiment, two axial direction moving shafts 12 and two radial direction moving shafts 16 are provided in the secondary spindle mechanism 5, and therefore two annular cams 17 and two annular cams 18 are also provided.

Cam followers 21, 22 are disposed on the outer periphery of the annular cams 17, 18 to permit rotation of the annular cams 17, 18 and engage with the outer periphery of the annular cams 17, 18 during axial direction movement.

The cam followers 21, 22 can be moved in the axial direction by shaft moving mechanisms 23, 24 that serving as a guide shaft moving mechanism disposed on struts 58 standing upright on the moving plate 56.

As shown in FIG. 3, the shaft moving mechanisms 23, 24 each comprise a ball screw 71 serving as a screw body that is connected to an output shaft of a motor 70 so as to extend in the axial direction, a linear guide 72 that extends parallel to the ball screw 71, and a follower 73 that is whirl-stopped by being engaged to the linear guide 72 and screwed to the ball screw 71. The respective followers 73 are connected to the cam followers 21, 22.

When the motor 70 is driven to rotate, the follower 73 moves along the linear guide 72, and as a result, the cam followers 21, 22 move in the axial direction. Accordingly, the cam followers 21, 22 engage with the outer periphery of the annular cams 17, 18 such that the annular cams 17, 18 also move in the axial direction. Thus, the axial direction moving shaft 12 and the radial direction moving shaft 16 move in the axial direction.

The rotating moving plate 13, axial direction moving shaft 12, radial direction moving shaft 16, bell crank 15, annular cams 17, 18, cam followers 21, 22, and shaft moving mechanisms 23, 24 described above together constitute the guide moving mechanism 20.

The guide moving mechanism 20A that moves the opposing formers 11A in the axial direction and radial direction is constituted by a rotating moving plate 13A, an axial direction moving shaft 12A, a radial direction moving shaft 16A, a bell crank 15A, annular cams 17A, 18A, cam followers 21A, 22A, and shaft moving mechanisms 23A, 24A, similarly to the guide moving mechanism 20. The constitution of the guide moving mechanism 20A is identical to that of the guide moving mechanism 20, and hence description thereof has been omitted.

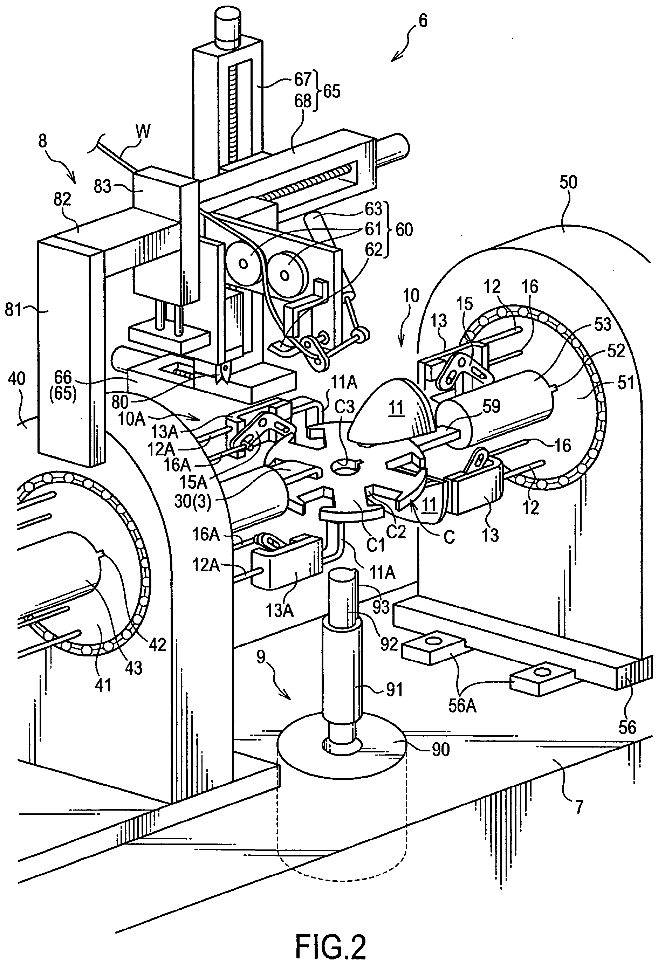

As shown in FIGs. 1 and 2, the wire supply mechanism 6 comprises a wire feeding portion 60 and a triaxial moving mechanism 65 that moves the wire feeding portion 60 in three orthogonal axial directions.

The triaxial moving mechanism 65 comprises a horizontal axis moving mechanism 66 that moves the wire feeding portion 60 in a horizontally orthogonal direction to the main and secondary spindle shafts 43, 53, a vertical axis moving mechanism 67 that is supported by the horizontal axis moving mechanism 66 and moves the wire feeding portion 60 in a vertical direction, and a front-rear axis moving mechanism 68 that is supported by the vertical axis moving mechanism 67 and moves the wire feeding portion 60 in the axial direction of the main and secondary spindle shafts 43, 53.

The wire feeding portion 60 comprises a guide roller 61 that guides the wire W supplied from a wire supply source (not shown), a nozzle (not shown) that feeds out the wire W guided by the guide roller 61, and a wire clamp 62 that clamps and holds the wire W between the nozzle and the guide roller 61 using the biasing force of a cylinder 63. It should be noted that a roller may be used instead of the nozzle to feed out the wire W.

The wire supply mechanism 6 operates to feed the wire W while controlling the position of the wire feeding portion 60 relative to the winding subject tooth C1 using the triaxial moving mechanism 65. The wire clamp 62 is opened to allow the wire W to be fed during a winding operation, and halts feeding of the wire W upon completion of the winding operation by clamping the wire W.

The cutting mechanism 8 comprises an elevator mechanism 83 that is supported via a strut 81 and a cross member 82 fixed to the head 40 of the main spindle mechanism 4, and a cutter 80 supported by the elevator mechanism 83. Every time a winding operation is completed, the cutting mechanism 8 operates to move the cutter 80 to an operating position using the elevator mechanism 83 and cut the wire W between a winding end of the wire W, which is wound around the winding subject tooth C1, and the wire feeding portion 60 using the cutter 80.

The index mechanism 9 comprises an index motor 90 disposed below the support base 7, a vertical cylinder 91 fixed to a motor shaft projecting upward from the index motor 90, and an index shaft 92 fixed to an upper end of the vertical cylinder 91.

The index shaft 92 is inserted into a shaft hole C3 formed in the armature core C via a key 93 so as to be capable of rotating integrally with the armature core C.

The index mechanism 9 includes a standby position in which the index shaft 92 is lowered, and an operating position in which the index shaft 92 is elevated. The standby position and operating position are switched by driving the vertical cylinder 91. Further, the index motor 90 rotates the index shaft 92 to a predetermined rotation position.

Every time winding around a single tooth C1 is completed, the index shaft 92 is elevated toward the armature core C supported by the chuck mechanism 3 from the standby position to the operating position. At this time, the rotation position of the index shaft 92 is controlled by the index motor 90 such that the rotation position of the key 93 of the index shaft 92 matches the rotation position of a key groove in the shaft hole C3 of the armature core C, which is stored in a controller (not shown). Then, with the chuck mechanism 3 in an open state, the index motor 90 rotates the armature core C such that the tip end surface of the next winding subject tooth C1 opposes the projection 59 of the secondary spindle shaft 53. Then, once the grip of the chuck mechanism 3 on the armature core C has been confirmed, the index shaft 92 is lowered to the standby position by the vertical cylinder 91.

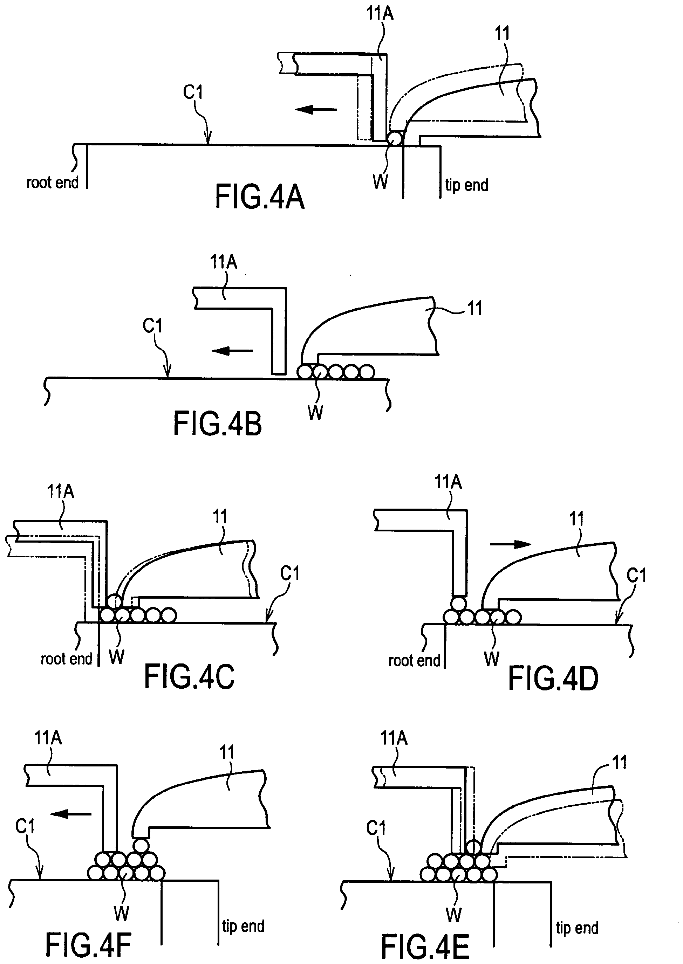

Next, referring to FIG. 4, a winding method employed by the winding device 1 constituted as described above will be described.

First, the cylinder 34 of the chuck mechanism 3 is activated to move the chuck opening/closing rod 33 forward, whereby the tip end cam 35 is inserted between the inclined cams 32 and the chucks 30 are opened by being caused to flare outward in the radial direction.

Next, the armature core C, having been set in its rotation position, is inserted between the chucks 30 by a work piece supply mechanism such as a component supply robot, not shown in the figures. The chuck opening/closing rod 33 is then withdrawn to the standby position by the cylinder 34. As a result, the chucks 30 are closed by the biasing force of the spring 31, and the armature core C is supported. The winding subject tooth C1 of the armature core C thus extends in the axial direction of the main spindle shaft 43 such that the tip end surface thereof opposes the projection 59 of the secondary spindle shaft 53.

When the armature core C is set using the index mechanism 9, first the armature core C is held by the index shaft 92 in the standby position. Next, the index shaft 92 is elevated, and immediately before the operating position, the armature core C is rotated by a predetermined angle to avoid interference between the chuck mechanism 3 and the teeth C 1. Once the index shaft 92 has reached the operating position, the armature core C is returned to its initial rotation position so as to be supported by the chuck mechanism 3.

Next, the spindle moving motor 57 is driven to move the moving plate 56, whereby the secondary spindle mechanism 5 is moved forward toward the main spindle mechanism 4 until the projection 59 on the tip end of the secondary spindle shaft 53 comes into contact with the tip end surface of the winding subject tooth C1. Setting of the armature core C is thereby completed. When the armature core C is set using the index mechanism 9, the index shaft 92 is lowered to the standby position at this point.

Next, the opposing formers 11A of the main spindle mechanism 4 are moved to a winding start position of the winding subject tooth C1 by driving the shaft moving mechanisms 23A and 24A. More specifically, as shown in FIG. 4A, the tip end of the opposing former 11A is positioned in a position removed from a tip end side winding end of the winding subject tooth C1 by an amount corresponding to the diameter of the wire W.

Similarly, the formers 11 of the secondary spindle mechanism 5 are moved to the winding start position of the winding subject tooth C1 by driving the shaft moving mechanisms 23 and 24. More specifically, as shown in FIG. 4A, the tip end of the former 11 is positioned at the tip end side winding end of the winding subject tooth C1.

Hence, as shown in FIG. 4A, the former 11 and the opposing former 11A are disposed with a single pitch axial direction gap corresponding to the diameter of the wire W therebetween. Further, the radial direction positions of the former 11 and opposing former 11A are set such that the former 11 and opposing former 11A are either in contact with or near the front surface of the winding subject tooth C1.

It should be noted that FIGs. 4A to 4F show only the former 11 and opposing former 11A disposed on one side of the tooth C1, but the former 11 and opposing former 11A are disposed similarly on the other side (the lower side in the figure) of the tooth C 1.

Next, the wire feeding portion 60 is moved by the triaxial moving mechanism 65 such that the tip end of the wire W, which extends from the wire feeding portion 60 and is held by the wire clamp 62, is moved to the winding start position of the winding subject tooth C 1. The wire W is then gripped by a wire starting end holding portion (not shown) provided in the vicinity of the winding subject tooth C1 and thereby set in a winding start state. The wire clamp 62 is then opened such that the wire W is fed toward the winding subject tooth C1 from the wire feeding portion 60 while tension is applied to the wire W by a tension device (not shown).

In this state, the spindle motors 45, 55 on each side are rotated synchronously to rotate the armature core C. As a result, the winding subject tooth C1 rotates with the main and secondary spindle shafts 43, 53 serving as a central axis. The wire W fed from the wire feeding portion 60 is guided to the gap between the tip end of the former 11 and the opposing former 11A and wound around the outer periphery of the winding subject tooth C1.

Once the winding subject tooth C1 has completed a single revolution such that the wire W is wound once around the winding subject tooth C1, the opposing former 11A is moved by a single pitch toward the root side of the winding subject tooth C1, as shown by a broken line in FIG. 4A. Further, the former 11 is moved in the radial direction away from the front surface of the winding subject tooth C1, and also moved by a single pitch toward the root side of the winding subject tooth C1 so as to hover over the wound first winding of the wire W. Thus, the former 11 and opposing former 11A are disposed at a single pitch gap. The wire W is then guided to the gap between the former 11 and the opposing former 11A, whereupon a second winding is wound.

Similarly thereafter, every time the winding subject tooth C1 completes a single revolution such that the wire W is wound once around the winding subject tooth C1, the former 11 and opposing former 11A are moved gradually toward the center of the armature core C while maintaining the single pitch gap. The wire feeding portion 60 is also moved toward the center of the armature core C in synchronization with the former 11 and the opposing former 11A.

As shown in FIG. 4B, by performing winding in this manner, the wire W is wound around the winding subject tooth C1 such that adjacent side faces of the wire W contact each other, and thus regular winding is achieved.

Once the wire W has been wound up to the root end of the winding subject tooth C1 such that winding of a first layer is complete, as shown by a broken line in FIG. 4C, the former 11 is moved by a half pitch (half the diameter of the wire W) toward the tip end side of the winding subject tooth C1, as shown by a solid line in FIG. 4C. Further, the opposing former 11A is moved in the radial direction away from the front surface of the winding subject tooth C1, and moved by a half pitch toward the tip end side of the winding subject tooth C1 so as to hover over the wound final winding of the first layer of the wire W. The wire W is then guided to the single pitch gap between the former 11 and opposing former 11A, whereupon the first winding of a second layer is wound.

Next, as shown in FIG. 4D, the former 11 is moved by a single pitch toward the tip end side of the winding subject tooth C1. Further, the opposing former 11A is moved in the radial direction away from the front surface of the winding subject tooth C1, and moved by a single pitch toward the tip end side of the winding subject tooth C1 so as to hover over the wound first winding of the second layer of the wire W. The wire W is then guided to the gap between the former 11 and opposing former 11A, whereupon the second winding of the second layer is wound.

The second layer is wound by moving the former 11 and opposing former 11A gradually toward the outer peripheral side of the armature core C while maintaining the single pitch gap every time the winding subject tooth C1 completes a single revolution such that the wire W is wound once around the winding subject tooth C1.

Once the wire W has been wound up to the tip end of the winding subject tooth C1 such that winding of the second layer is complete, as shown by a broken line in FIG. 4E, the opposing former 11A is moved by a half pitch toward the root side of the winding subject tooth C1, as shown by a solid line in FIG. 4E. Further, the former 11 is moved in the radial direction away from the front surface of the winding subject tooth C1, and moved by a half pitch toward the root side of the winding subject tooth C1 so as to hover over the wound final winding of the second layer of the wire W. The wire W is then guided to the single pitch gap between the former 11 and opposing former 11A, whereupon the first winding of a third layer is wound.

Next, as shown in FIG. 4F, the opposing former 11A is moved by a single pitch toward the root side of the tooth C 1. Further, the former 11 is moved in the radial direction away from the front surface of the winding subject tooth C1, and moved by a single pitch toward the root side of the winding subject tooth C1 so as to hover over the wound first winding of the third layer of the wire W. The wire W is then guided to the gap between the former 11 and opposing former 11A, whereupon the second winding of the third layer is wound.

The third layer is wound by moving the former 11 and opposing former 11A gradually toward the center of the armature core C while maintaining the single pitch gap every time the winding subject tooth C1 completes a single revolution such that the wire W is wound once around the winding subject tooth C1.

By repeating the operation described above, the wire W is wound around the tooth C1 in a predetermined number of layers. Once the predetermined number of layers has been wound, rotation of the main and secondary spindle shafts 43, 53 is halted, and the formers 11 and opposing formers 11A are withdrawn to the standby position. The end portion of the wire W is tied to a terminal portion of the armature core C. During tying of the wire W, tension is applied to the wire W fed from the wire feeding portion 60 to ensure that the wire W does not slacken.

When the tying operation of the wire W is complete, feeding of the wire W from the wire feeding portion 60 is halted by the wire clamp 62, and the wire feeding portion 60 is returned to the initial position by the triaxial moving mechanism 65.

Thus, winding onto a single tooth C1 of the armature core C is completed.

When winding around a single tooth C1 is complete, the index shaft 92 of the index mechanism 9 is elevated and inserted into the shaft hole C3 of the armature core C. Then, with the secondary spindle shaft 53 withdrawn and the chuck mechanism 3 open, the index motor 90 is driven to rotate the armature core C by an amount corresponding to a single tooth, whereby a new tooth C1 is caused to face the projection 59 of the secondary spindle shaft 53. Once the new tooth C1 has been thus positioned, the armature core C is gripped by the chuck mechanism 3 and the secondary spindle shaft 53 is moved forward such that the projection 59 on its tip end comes into contact with the tip end surface of the new tooth C 1, thereby supporting the new tooth C 1.

When the new tooth C1 is supported, the index shaft 92 is lowered to the standby position, whereupon winding is performed on the new tooth C1 in the manner described above.

When winding has been performed on all of the teeth C1 of the armature core C, the wire W is held by the wire clamp 62 and cut by the cutter 80 between the wire clamp 62 and the armature core C. Then, the secondary spindle mechanism 5 is withdrawn, the chuck mechanism 3 is opened, and the wound armature core C is removed.

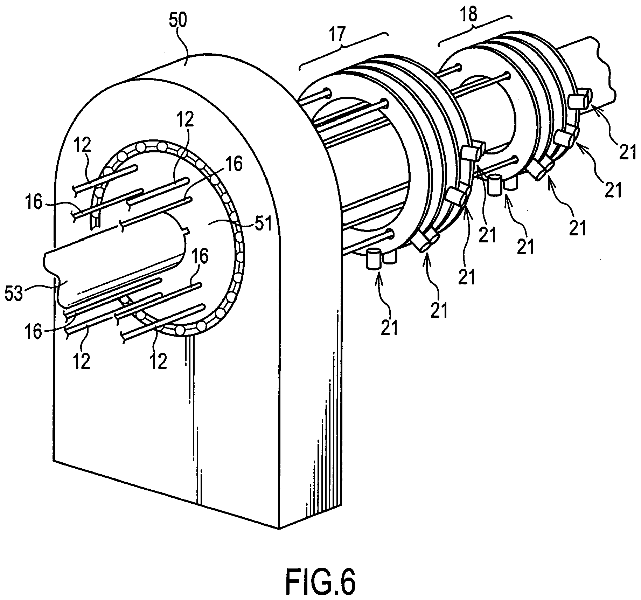

In the above embodiment, the pair of formers 11 and the pair of opposing formers 11A, which are disposed so as to sandwich the tooth C1, are used as the guides 10, 10A. However, depending on the shape of the work piece, the wire W may be guided to the winding position more accurately by modifying the shape of the guides or increasing the number of guides. Further, as shown in FIG. 6, the guides 10, 10A may be increased in number easily by increasing the number of the axial direction moving shaft 12, the radial direction moving shaft 16, and the annular cams 17, 18.

The embodiment described above exhibits the following effects.

The winding device 1 performs winding by rotating the armature core C, which serves as a work piece, together with the guides 10, 10A, and since a heavy rotary member such as a flyer is not required, vibration is unlikely to occur during the winding operation.

Further, the winding device 1 rotates the armature core C together with the guides 10, 10A and supplies the wire W to the armature core C from the wire feeding portion 60, and therefore a feeding route of the wire W is simplified, enabling a reduction in the distance from the wire feeding portion 60 to the armature core C. Hence, variation in the tension of the wire W while the wire W slides over the guides 10, 10A and is wound onto the armature core C can be suppressed, and as a result, regular winding can be performed with stability.

Further, since the winding device 1 rotates the armature core C together with the guides 10, 10A and supplies the wire W to the armature core C from the wire feeding portion 60, a twist does not occur in the wire W. Hence, even when thick, highly rigid wire W is wound, regular winding can be performed with stability. Even when flat wire having a square cross-section is used as the wire W to be wound in order to increase the space factor, situations in which the wire W is twisted and, in certain cases, turns upside-down do not occur, and therefore regular winding can be performed with stability.

Further, the winding device 1 comprises at least one of the former 11, which rotates together with the secondary spindle shaft 53, and the opposing former 11A, which rotates together with the main spindle shaft 43, as guides that guide the wire W to the armature core C, and the former 11 and opposing former 11A are constituted to be capable of moving in the axial direction and the radial direction of the main and secondary spindle shafts 43, 53. Hence, when only the former 11 is provided as a guide, the wire W to be wound can be guided from the secondary spindle mechanism 5 side, and when only the opposing former 11A is provided as a guide, the wire W to be wound can be guided from the main spindle mechanism 4 side. When both the former 11 and the opposing former 11A are provided as guides, the wire W to be wound can be guided from both the main spindle mechanism 4 side and the secondary spindle mechanism 5 side. Hence, various wire guiding methods can be selected in accordance with the shape of the work piece, and regular winding can be performed accurately over a plurality of layers in accordance with the shape of the work piece.

Further, the axial direction moving shaft 12, radial direction moving shaft 16, and annular cams 17, 18 of the guide moving mechanism 20 are constituted to be capable of rotating together with the main and secondary spindle shafts 43, 53, and the shaft moving mechanisms 23, 24 that set the axial direction positions of the axial direction moving shaft 12 and the radial direction moving shaft 16 are disposed on the exterior of the main and secondary spindle shafts 43, 53. Therefore, the main and secondary spindle shafts 43, 53 can be made compact. Accordingly, the rotary inertial force of the main and secondary spindle shafts 43, 53 decreases, leading to a reduction in vibration during the winding operation, and as a result, a higher rotation speed than that of a flyer winding device can be achieved, enabling a reduction in the winding tact.

Furthermore, by increasing the numbers of the axial direction moving shaft 12, the radial direction moving shaft 16, the annular cams 17, 18, and the cam followers 21, 22, the guides 10, 10A that guide the wire W to the winding position can be increased in number. As a result, the wire W can be guided to the winding position more accurately, and therefore regular winding can be performed more accurately.

Further, the axial direction moving shaft 12 is connected directly to the former 11, while the radial direction moving shaft 16 is connected to the former 11 via the bell crank 15, and therefore, by controlling the axial direction movement of the axial direction moving shaft 12 and the radial direction moving shaft 16, the axial direction position and radial direction position of the former 11 can be adjusted easily.

Further, the shaft moving mechanisms 23, 24 comprise the follower 73 connected to the cam followers 21, 22, the ball screw 71 screwed to the follower 73, and the motor 70 that rotates the ball screw 71, and by adjusting the rotation position of the motor 70 so as to adjust the axial direction position of the cam followers 21, 22, the annular cams 17, 18 are moved in the axial direction. The cam followers 21, 22 are engaged with the outer periphery of the annular cams 17, 18, and therefore, even when winding is performed on the work piece using a large number of guides, as shown in FIG. 6, the cam followers 21 can be disposed at the outer peripheries of the large number of the annular cams 17, 18 without interfering each other.

Further, the bell crank 15, which converts axial direction movement into radial direction movement, is connected to the radial direction moving shaft 16 at one end and to the former 11 at the other end, and as a result, axial direction movement of the radial direction moving shaft 16 is converted easily into radial direction movement of the former 11. Here, by forming an elongated hole in either the radial direction moving shaft 16 and the former 11 or the bell crank 15 and rotatably disposing an idler roller that engages with the elongated hole on the other, axial direction movement of the radial direction moving shaft 16 can be converted smoothly into radial direction movement of the former 11.

This invention is not limited to the embodiment described above, and may of course be subjected to various modifications within the scope of the claims 1 to 8.

For example, in the embodiment described above, the chuck mechanism 3 is provided on the main spindle mechanism 4 as work piece holding means, but a chuck mechanism that supports the work piece may be provided on the tip end of the secondary spindle shaft 53 of the secondary spindle mechanism 5 such that the work piece is supported from both sides.

Further, in the embodiment described above, a thick, highly rigid wire is preferably used as the wire W, but regular winding can also be performed using thin wire or the like, with which the locus of the wire W does not follow the movement locus of the wire feeding portion 60.

## Claims

1. A winding device (1) that winds a wire (W) around a rotating work piece (C), comprising:
a spindle shaft (43, 53) that supports the work piece (C) and rotates about an axial center;
a wire supply mechanism (6) that supplies the wire (W) to the work piece (C);
a guide (10, 10A) that rotates together with the spindle shaft (43, 53) and guides the wire (W) supplied by the wire supply mechanism (6) to a winding position of the work piece (C); and
a guide moving mechanism (20, 20A) that adjusts the winding position of the work piece (C) by adjusting a position of the guide (10, 10A) relative to the work piece (C),
wherein the guide (10, 10A) is capable of being moved in an axial direction and a radial direction of the spindle shaft (43, 53) by the guide moving mechanism (20, 20A),
wherein the guide moving mechanism (20, 20A) comprises a guide shaft (12, 16, 12A, 16A) that is connected to the guide (10, 10A), rotates together with the spindle shaft (43, 53), and is capable of moving relative to the spindle shaft (43, 53) in the axial direction,
**characterized in that** the guide shaft (12, 16, 12A, 16A) comprises:
a first guide shaft (12, 12A) connected to the guide (10, 10A); and
a second guide shaft (16, 16A) connected to the guide (10, 10A) via a conversion mechanism (15, 15A) that converts movement in the axial direction into movement in the radial direction,
wherein the guide (10, 10A) is moved in the axial direction of the spindle shaft (43, 53) by moving the first guide shaft (12, 12A) and the second guide shaft (16, 16A) synchronously in the axial direction of the spindle shaft (43, 53), and
wherein the guide (10, 10A) is moved in the radial direction of the spindle shaft (43, 53) by moving the first guide shaft (12, 12A) and the second guide shaft (16, 16A) relatively in the axial direction of the spindle shaft (43, 53).

2. The winding device (1) as defined in Claim 1, wherein the spindle shaft (43, 53) comprises:
a main spindle shaft (43) that supports the work piece (C) and rotates about an axial center; and
a secondary spindle shaft (53) that is disposed coaxially with and on an opposite side of the work piece (C) to the main spindle shaft (43), and rotates synchronously with the main spindle shaft (43), and
the guide (10, 10A) comprises at least one of a first guide (11) that rotates together with the secondary spindle shaft (53) and a second guide (11A) that rotates together with the main spindle shaft (43).

3. The winding device (1) as defined in Claim 2, wherein the guide (10, 10A) comprises the first guide (11) and the second guide (11 A), which is disposed opposite to the first guide (11), and
the wire (W) supplied by the wire supply mechanism (6) is guided between the first guide (11) and the second guide (11 A) so as to be guided to the winding position of the work piece (C).

4. The winding device (1) as defined in Claim 1, wherein the guide moving mechanism (20, 20A) comprises:
an annular cam (17, 18, 17A, 18A) that is disposed on an outer periphery of the spindle shaft (43, 53), connected to the guide shaft (12, 16, 12A, 16A), and rotates together with the spindle shaft;
a cam follower (21, 22, 21A, 22A) that allows the annular cam (17, 18, 17A, 18A) to rotate and engages with the annular cam when moving in the axial direction of the spindle shaft (43, 53); and
a guide shaft moving mechanism (23, 24, 23A, 24A) that sets an axial direction position of the guide shaft (12, 16, 12A, 16A) by adjusting a position of the cam follower (21, 22, 21A, 22A) in the axial direction of the spindle shaft (43, 53).

5. The winding device (1) as defined in Claim 4, wherein the guide shaft moving mechanism (23, 24, 23A, 24A) comprises:
a follower (73) connected to the cam follower (21, 22, 21A, 22A);
a screw body (71) screwed to the follower (73); and
a motor (70) that rotates the screw body (71), and
by adjusting a rotation position of the motor (70), the position of the cam follower (21, 22, 21A, 22A) in the axial direction of the spindle shaft (43, 53) is adjusted.

6. The winding device (1) as defined in Claim 1, wherein the conversion mechanism (15, 15A) is a bell crank connected to the second guide shaft (16, 16A) at one end and connected to the guide (10, 10A) at the other end.

7. The winding device (1) as defined in Claim 6, wherein an elongated hole is formed in either the second guide shaft (16, 16A) and the guide (10, 10A) or the bell crank (15, 15A), and an idler roller that engages with the elongated hole is disposed rotatably on the other.

## Patentansprüche

1. Wicklungsvorrichtung (1), die einen Draht (W) um ein rotierendes Werkstück (C) wickelt, umfassend:
eine Spindelwelle (43, 53), die das Werkstück (C) trägt und sich um eine axiale Mitte dreht;
einen Drahtzuführmechanismus (6), der dem Werkstück (C) den Draht (W) zuführt;
eine Führung (10, 10A), die sich zusammen mit der Spindelwelle (43, 53) dreht und den Draht (W), der von dem Drahtzuführmechanismus (6) zugeführt wird, zu einer Wicklungsposition des Werkstücks (C) leitet, und
einen Führungsbewegungsmechanismus (20, 20A), der die Wicklungsposition des Werkstücks (C) durch Justieren einer Position der Führung (10, 10A) relativ zu dem Werkstück (C), einstellt,
wobei die Führung (10, 10A) geeignet ist, durch den Führungsbewegungsmechanismus (20, 20A) in einer axialen Richtung und einer radialen Richtung der Spindelwelle (43, 53) bewegt zu werden,
wobei der Führungsbewegungsmechanismus (20, 20A) eine Führungswelle (12, 16, 12A, 16A) umfasst, die mit der Führung (10, 10A) verbunden ist, sich zusammen mit der Spindelwelle (43, 53) dreht, und zu einer Bewegung relativ zu der Spindelwelle (43, 53) in der axialen Richtung geeignet ist,
**dadurch gekennzeichnet, dass** die Führungswelle (12, 16, 12A, 16A) nachstehende Komponenten umfasst:
eine erste Führungswelle (12, 12A), verbunden mit der Führung (10, 10A); und
eine zweite Führungswelle (16, 16A), verbunden mit der Führung (10, 10A) mittels eines Bewegungsumkehrmechanismus (15, 15A), der eine Bewegung in der axialen Richtung in eine Bewegung in der radialen Richtung umkehrt,
wobei durch Bewegen der ersten Führungswelle (12, 12A) und der zweiten Führungswelle (16, 16A) synchron in der axialen Richtung der Spindelwelle (43, 53) die Führung (10, 10A) in der axialen Richtung der Spindelwelle (43, 53) bewegt wird, und
wobei durch Bewegen der ersten Führungswelle (12, 12A) und der zweiten Führungswelle (16, 16A) relativ in der axialen Richtung der Spindelwelle (43, 53) die Führung (10, 10A) in der radialen Richtung der Spindelwelle (43, 53) bewegt wird.

2. Wicklungsvorrichtung (1) nach Anspruch 1, wobei die Spindelwelle (43, 53) umfasst:
eine Hauptspindelwelle (43), die das Werkstück (C) trägt und sich um eine axiale Mitte dreht; und
eine sekundäre Spindelwelle (53), die koaxial mit und auf einer der Hauptspindelwelle (43) entgegengesetzten Seite des Werkstücks (C) angeordnet ist und sich synchron mit der Hauptspindelwelle (43) dreht, und
die Führung (10, 10A), die eine erste Führung (11), die sich zusammen mit dem sekundären Spindelschaft (53) dreht, und/oder eine zweite Führung (11A) umfasst, die sich zusammen mit dem Hauptspindelschaft (43) dreht.

3. Wicklungsvorrichtung (1) nach Anspruch 2, wobei die Führung (10, 10A) die erste Führung (11) und die zweite Führung (11A) umfasst, die gegenüberliegend zu der ersten Führung (11) angeordnet ist, und
wobei der Draht (W), der durch den Drahtzuführmechanismus (6) zugeführt wird, zwischen die erste Führung (11) und die zweiten Führung (11A) geführt wird, um so zu der Wicklungsposition des Werkstücks (C) geleitet zu werden.

4. Wicklungsvorrichtung (1) nach Anspruch 1, wobei der Führungsbewegungsmechanismus (20, 20A) umfasst:
einen ringförmigen Nocken (17, 18, 17A, 18A), der auf einem Außenumfang der Spindelwelle (43, 53) angeordnet ist, verbunden mit der Führungswelle (12, 16, 12A, 16A), und sich zusammen mit der Spindelwelle dreht;
einen Nockenstößel (21, 22, 21A, 22A), der es dem ringförmigen Nocken (17, 18, 17A, 18A) ermöglicht, sich zu drehen, und mit dem ringförmigen Nocken in Eingriff steht, wenn er sich in der axialen Richtung der Spindelwelle (43, 53) bewegt; und
einen Führungswellen-Bewegungsmechanismus (23, 24, 23A, 24A), der eine axiale Richtungsposition der Führungswelle (12, 16, 12A, 16A) durch Justieren einer Position des Nockenstößels (21, 22, 21A, 22A) in der axialen Richtung der Spindelwelle (43, 53) einstellt.

5. Wicklungsvorrichtung (1) nach Anspruch 4, wobei der Führungswellen-Bewegungsmechanismus (23, 24, 23A, 24A) umfasst:
einen Stößel (73), der mit dem Nockenstößel (21, 22, 21A, 22A) verbunden ist;
einen Schraubenkörper (71), der mit dem Stößel (73) verschraubt ist; und
einen Motor 70, der den Schraubenkörper (71) dreht, und
wobei durch Justieren einer Drehposition des Motors (70) die Position des Nockenstößels (21, 22, 21A, 22A) in der axialen Richtung der Spindelwelle (43, 53) eingestellt wird.

6. Wicklungsvorrichtung (1) nach Anspruch 1, wobei der Bewegungsumkehrmechanismus (15, 15A) ein Umlenkhebel ist, der an einem Ende mit der zweiten Führungswelle (16, 16A) und an dem anderen Ende mit der Führung (10, 10A) verbunden ist.

7. Wicklungsvorrichtung (1) nach Anspruch 6, wobei ein langgestrecktes Loch entweder in der zweiten Führungswelle (16, 16A) und der Führung (10, 10A) oder dem Umlenkhebel (15, 15A) ausgebildet ist, und eine Mitläuferwalze, die mit dem langgestreckten Loch in Eingriff steht, drehbar auf der anderen angeordnet ist.

## Revendications

1. Dispositif de bobinage (1) qui bobine un fil (W) autour d'une pièce de travail tournante (C), comprenant :
un arbre à broche (43, 53) qui supporte la pièce de travail (C) et tourne autour d'un centre axial,
un mécanisme de fourniture de fil (6) qui délivre le fil (W) à la pièce de travail (C),
un guide (10, 10A) qui tourne avec l'arbre à broche (43, 53) et guide le fil (W) délivré par le mécanisme de fourniture de fil (6) vers une position de bobinage de la pièce de travail (C), et
un mécanisme de déplacement de guide (20, 20A) qui ajuste la position de bobinage de la pièce de travail (C) en ajustant la position du guide (10, 10A) par rapport à la pièce de travail (C),
dans lequel le guide (10, 10A) peut être déplacé dans la direction axiale et dans une direction radiale de l'arbre à broche (43, 53) grâce au mécanisme de déplacement de guide (20, 20A),
dans lequel le mécanisme de déplacement de guide (20, 20A) comprend un arbre de guidage (12, 16, 12A, 16A) qui est relié au guide (10, 10A), tourne avec l'arbre à broche (43, 53) et peut se déplacer par rapport à l'arbre à broche (43, 53) dans la direction axiale,
**caractérisé en ce que** l'arbre de guidage (12, 16, 12A, 16A) comprend :
un premier arbre de guidage (12, 12A) relié au guide (10, 10A), et
un second arbre de guidage (16, 16A) relié au guide (10, 10A) par l'intermédiaire d'un mécanisme de conversion (15, 15A) qui convertit le mouvement dans la direction axiale en un mouvement dans la direction radiale,
dans lequel le guide (10, 10A) est déplacé dans la direction axiale de l'arbre à broche (43, 53) en déplaçant le premier arbre de guidage (12, 12A) et le second arbre de guidage (16, 16A) de façon synchrone dans la direction axiale de l'arbre à broche (43, 53), et
dans lequel le guide (10, 10A) est déplacé dans la direction radiale de l'arbre à broche (43, 53) en déplaçant relativement le premier arbre de guidage (12, 12A) et le second arbre de guidage (16, 16A) dans la direction axiale de l'arbre à broche (43, 53).

2. Dispositif de bobinage (1) selon la revendication 1, dans lequel l'arbre à broche (43, 53) comprend :
un arbre à broche (43) principal qui supporte la pièce de travail (C) et tourne autour d'un centre axial, et
un arbre à broche (53) secondaire qui est disposé pour être coaxial avec la pièce de travail (C) et sur un côté opposé à celle-ci sur l'arbre à broche (43) principal, et qui tourne de façon synchrone avec l'arbre à broche (43) principal, et
le guide (10, 10A) comprend au moins l'un d'un premier guide (11) qui tourne avec l'arbre à broche (53) secondaire et un second guide (11A) qui tourne avec l'arbre à broche (43) principal.

3. Dispositif de bobinage (1) selon la revendication 2, dans lequel le guide (10, 10A) comprend le premier guide (11) et le second guide (11A) qui est disposé du côté opposé au premier guide (11), et
le fil (W) délivré par le mécanisme de délivrance de fil (6) est guidé entre le premier guide (11) et le second guide (11A) de façon à être dirigé vers la position de bobinage de la pièce de travail (C).

4. Dispositif de bobinage (1) selon la revendication 1, dans lequel le mécanisme de déplacement de guide (20, 20A) comprend :
une came annulaire (17, 18, 17A, 18A) qui est disposée sur la périphérie externe de l'arbre à broche (43, 53), reliée à l'arbre de guidage (12, 16, 12A, 16A) et tourne avec l'arbre à broche,
un poussoir de came (21, 22, 21A, 22A) qui permet à la came annulaire (17, 18, 17A, 18A) de tourner et qui se met en prise avec la came annulaire lorsqu'il se déplace dans la direction axiale de l'arbre à broche (43, 53), et
un mécanisme de déplacement d'arbre de guidage (23, 24, 23A, 24A) qui règle la position dans la direction axiale de l'arbre de guidage (12, 16, 12A, 16A) en ajustant la position du poussoir de came (21, 22, 21A, 22A) dans la direction axiale de l'arbre à broche (43, 53).

5. Dispositif de bobinage (1) selon la revendication 4, dans lequel le mécanisme de déplacement d'arbre de guidage (23, 24, 23A, 24A) comprend :
un poussoir (73) relié au poussoir de came (21, 22, 21A, 22A),
un corps de vis (71) vissé sur le poussoir (73), et
un moteur (110) qui fait tourner le corps de vis (71), et où
en ajustant la position de rotation du moteur (70), on ajuste la position du poussoir de came (21, 22, 21A, 22A) dans la direction axiale de l'arbre à broche (43, 53).

6. Dispositif de bobinage (1) selon la revendication 1, dans lequel le mécanisme de conversion (15, 15A) est un levier coudé relié au second arbre de guidage (16, 16A) à une extrémité et relié au guide (10, 10A) à l'autre extrémité.

7. Dispositif de bobinage (1) selon la revendication 6, dans lequel un trou allongé est formé soit dans le second arbre de guidage (16, 16A) et dans le guide (10, 10A), soit dans le levier coudé (15, 15A), et un galet fou qui est en prise avec le trou allongé est disposé pour pouvoir tourner sur l'autre.
